# EUROPÄISCHE PATENTANMELDUNG

(11) **EP 1 491 753 A1**
(43) Veröffentlichungstag der Anmeldung: **29.12.2004**
(21) Anmeldenummer: 04013977.6
(22) Anmeldetag: 15.06.2004
(51) Int. Cl.: F02M 21/02, F02B 23/10

(54) **Brennstoffzuführsystem und Einblasventil für eine Brennkraftmaschine**

(30) Priorität: 24.06.2003 DE 10328166
(71) Anmelder: DaimlerChrysler AG, 70567 Stuttgart (DE)
(72) Erfinder: Frey, Jürgen, 73728 Esslingen (DE); Huber, Gerd, 81737 München (DE); Karl, Günter Dr, 73732 Esslingen (DE); Krämer, Stephan Dr., 71409 Schwaikheim (DE)

(57) **Zusammenfassung**

Ein Brennstoffzuführsystem für eine fremdgezündete Brennkraftmaschine weist pro Zylinder ein Einblasventil (9) auf, dem Brennstoff und Verbrennungsgas zuführbar ist sowie wenigstens eine weitere Brennstoffzumesseinrichtung (7) in einem in den Brennraum (4) mündenden Ansaugkanal (6).

Um ein Brennstoffzuführsystem und ein Einlaßventil zu schaffen, welches mit geringem baulichen Aufwand einen Betrieb der fremdgezündeten Brennkraftmaschine mit optimaler Gemischbereitung bei geringen Abgasemissionen zu gewährleisten, ist erfindungsgemäß das Einblasventil als Kolben/Zylindereinheit ausgebildet, wobei ein Kolbenelement (16) eine Verbrennungsgas führende Einblaskammer (17) begrenzt, an welche eine Einblasdüse (19) für die Gemischabgabe angeschlossen ist.

## Beschreibung

Die Erfindung betrifft ein Brennstoffzuführsystem für eine fremdgezündete Brennkraftmaschine mit pro Zylinder einem Einlaßventil und wenigstens einer weiteren Brennstoffzumesseinrichtung der im Oberbegriff des Patentanspruchs 1 angegebenen Gattung sowie ein Einblasventil zur gleichzeitigen Abgabe von Brennstoff und Verbrennungsgas in einen Brennraum der Gattung gemäß dem Oberbegriff des Patentanspruchs 13.

Die DE 199 45 544 A1 offenbart ein Brennstoffzuführsystem für eine fremdgezündete Brennkraftmaschine, das pro Zylinder eine Zumesseinrichtung zur direkten Abgabe von Brennstoff in den Brennraum und wenigstens ein weiteres Einspritzventil vorsieht, das in einem Ansaugbereich der Brennkraftmaschine angeordnet ist, wobei die direkte Brennstoffabgabe in den Brennraum und die Kraftstoffzumessung in den Ansaugbereich von einem Steuergerät aufeinander abgestimmt wird. Bei dem bekannten Brennstoffzuführsystem kann pro Zylinder ein Direkteinspritzventil vorgesehen sein oder auch ein Einblasventil im Zylinderkopf angeordnet werden, mit dem der direkt zuzumessende Brennstoff gemeinsam mit einem gasförmigen Verbrennungsgas als Brennstoff/Verbrennungsgasgemisch direkt in den Brennraum abgegeben wird. Das bekannte Brennstoffzuführsystem will mit der vorgelagerten Kraftstoffabgabe in den Ansaugbereich erreichen, daß das zur direkten Brennstoffabgabe in den Brennraum vorgesehene Ventil mit einem günstigen Kleinst-/Größtmengenverhältnis (Spreizung) ausgebildet werden kann, da die pro Arbeitsspiel abzugebende Brennstoffmenge auf zwei Wegen zuführbar ist. Das Direkteinspritzventil bzw. das Einblasventil werden daher von der Steuereinheit gemeinsam mit dem Saugrohrinjektor angesteuert.

In mittleren Lastbereichen der Brennkraftmaschine ist eine Betriebsart vorgesehen, bei der über den Ansaugbereich ein mageres, homogenes Gemisch bereitet und in den Brennraum eingeleitet wird, welches sodann durch die direkt eingebrachte Brennstoffmenge auf ein zündfähiges Maß angereichert werden soll. Die direkte Abgabe von Brennstoff mittels Kraftstoffeinspritzung oder Gemischeinblasung erfolgt während des Kompressionstaktes des Zylinders im geringen Abstand vor dem Zündzeitpunkt. Durch das direkt dem Brennraum zugeordnete Ventil, d. h. dem Einblasventil oder dem Direkteinspritzventil, erfolgt also eine Zündeinspritzung einer Brennstoffmenge zur örtlichen Gemischanfettung, mit dem die Zündsicherheit des mageren Gemisches gewährleistet werden soll.

Der Erfindung liegt die Aufgabe zugrunde, ein Brennstoffzuführsystem und ein Einlaßventil zu schaffen, welches mit geringem baulichen Aufwand einen Betrieb einer fremdgezündeten Brennkraftmaschine mit optimaler Gemischbereitung bei geringen Abgasemissionen gewährleistet.

Diese Aufgabe wird erfindungsgemäß mit einem Brennstoffsystem mit den Merkmalen des Patentanspruchs 1 und hinsichtlich des Einblasventils mit den Merkmalen des Patentanspruchs 13 gelöst.

Erfindungsgemäß ist vorgesehen, das Einblasventil als Kolben/Zylindereinheit auszubilden, wobei ein Kolbenelement längsbeweglich in einem Ventilgehäuse angeordnet ist und eine Verbrennungsgas führende Einblaskammer begrenzt, an welche eine Einblasdüse für die Gemischabgabe angeschlossen ist. Das Kolbenelement bildet dabei ein Steuerglied einer Schlitzsteuerung zur Freigabe der Zuführung von Brennstoff und Verbrennungsgas in das Einblasventil. Das Einblasventil mit Schlitzsteuerung ermöglicht ein Pumpe/Düse-Element zur Darstellung der Zündeinspritzung in sehr kompakter Bauweise. Das erfindungsgemäße Einblasventil kann auch leicht ausgetauscht und sogar bei bestehenden Kraftstoffzuführsystemen nachgerüstet werden. Dabei ist besonders vorteilhaft, wenn das Einblasventil unabhängig von der wenigstens einen Brennstoffzuführeinrichtung steuerbar ist, welche von der Steuereinheit zur Bemessung des betriebspunktabhängig abzugebenden Brennstoffes betätigt wird.

Das erfindungsgemäße Einblasventil wird insbesondere für die Zündeinspritzung einer Kleinstmenge an Brennstoff zur Stabilisierung der Entflammung eines insgesamt mageren Brennstoffgemisches eingesetzt. Die eingeblasene Brennstoffmenge kann dabei von der Steuereinheit berücksichtigt werden bei der Ansteuerung der weiteren Zumesseinrichtungen und der von ihnen abzugebenden Brennstoffmenge für den jeweiligen Betriebspunkt der Brennkraftmaschine. Die betriebspunktabhängige Brennstoffmenge kann allein über den Ansaugtrakt der Brennkraftmaschine nach Art der äußeren Gemischbildung zugeführt werden oder auch wie bei bekannten Brennstoffzuführsystemen mit mehreren Gemischbildnern durch kombinierte äußere und innere Gemischbildung durch direkte Abgabe in den Brennraum. Dabei kann ein für die kombinierte Gemischbildung einsetzbares Einblasventil auch für die Darstellung der Zündeinspritzung eingesetzt werden. Besonders vorteilhaft wird ein separates Einblasventil als Kolben/Zylindereinheit für die Zündeinspritzung eingesetzt, welches unabhängig von einem Steuernocken längsbewegbar beaufschlagt ist.

Die Steuerung des Einlaßventils wird zweckmäßig an die Steuerung der Gaswechselventile des Zylinders gekoppelt und daher der Steuernocken des Einblasventils von der Nockenwelle der Brennkraftmaschine angetrieben. Die Erfindung beruht dabei auf dem Gedanken, durch Einblasung des abzugebenden Brennstoffes mit einem sauerstoffhaltigen Frischgasstrom eine hohe Menge an Abgas bei der Gemischbildung beizumischen und dadurch ein inertes Brennstoffgrundgemisch mit hohem Abgasgehalt zünden und verbrennen zu können. Mit der Erfindung wird nämlich erreicht, daß die Einblasung des Brennstoffgases abgasreiches Brennstoffgemisch verdrängt und dadurch örtlich zündfähiges Gemisch mit der Zusammensetzung des eingeblasenen Brennstoffgases bereitgestellt werden kann. Daher wird das Einblasventil zweckmäßig benachbart der Zündkerze des Zylinders angeordnet oder/und das Einblasventil derart ausgerichtet, daß die Einblasdüse in den Umgebungsbereich der Zündkerze weist. Die Einblasung eines zündfähigen Gemisches im Rahmen der Zündeinspritzung hebt die Abgasverträglichkeit der zu verbrennenden Brennraumladung erheblich an. Die Abgasemission der Brennkraftmaschine kann erheblich gesenkt werden, da der zu verbrennenden Brennraumladung eine bis zu 5-fach gesteigerte Abgasmenge gegenüber bisher für möglich gehaltenen Rückführungsraten beigemischt werden kann.

Mit dem Kolbenelement des Einblasventils wird eine Verdichtung des Brennstoffgases im Einblasventil durchgeführt. Das Kolbenelement ist gegen die Rückstellkraft eines Federelementes bewegbar angeordnet, welches nach der Abgabe des Brennstoffgases in den Brennraum die Einblasdüse wieder verschließt. Vorteilhaft ist die Einblasdüse mit einer nach außen öffnenden Ventilnadel versehen, deren Öffnungsbewegung an die Wirkungsweise des Kolbenelementes gekoppelt ist. Die Gemischkammer im Inneren des Einblasventils wird durch Steuerschlitze in dem Ventilgehäuse versorgt, welche von dem Kolbenelement abdeckbar sind und im oberen Totpunkt der Kolbenbewegung freigegeben werden. Durch Versorgungsleitungen, welche an die Steuerschlitze angeschlossen werden, wird Frischluft in die Einblaskammer gesaugt bzw. an den separaten Brennstoffanschluß Brennstoff in das Volumen gesaugt. Das Brennstoffvolumen wird vorteilhaft durch einen in dem Kolbenelement ausgebildeten Versorgungskanal gebildet, welcher sich zwischen einer Einlaßöffnung am Umfang des Kolbenelementes, die mit dem Steuerschlitz in Überdeckung bringbar ist, und einem Auslaß aus dem Kolbenelement in einem nahe der Einlaßdüse liegenden Bereich der Einblaskammer erstreckt. Mit einer Brennstoffkammer im Versorgungskanal kann die zur Zündeinspritzung erforderliche Brennstoffmenge auf ein genaues Maß festgelegt werden.

Bei konstruktiv festlegbarer Menge des bei der Zündeinspritzung eingeblasenen Brennstoffgases kann der Einspritzzeitpunkt, der Einspritzdruck und auch der Einspritzverlauf der Zündeinspritzung optimal mit dem Betriebsverhalten der Brennkraftmaschine abgestimmt werden durch geeignete Koordinierung der Kontur des Steuernockens, der Drehzahl der Brennkraftmaschine oder auch der Abstimmung der Ventilfedern und des Brennraumdrucks. Eine weitere Variation des Zeitpunktes und/oder des Drucks der Brennstoffabgabe des Einblasventils kann durch Anbindung eines zusätzlichen Ventils erfolgen. Durch ein zusätzliches Magnetventil oder piezoelektrisches Ventil kann das Einspritztiming und der Einspritzdruck in bestimmten Kennfeldbereichen variiert werden.

Ein Ausführungsbeispiel der Erfindung ist nachstehend anhand der Zeichnung näher erläutert.

Dabei zeigen:
- Fig. 1: einen schematischen Längsschnitt einer Brennkraftmaschine,
- Fig. 2: einen Längsschnitt eines Einblasventils,
- Fig. 3: das Einblasventil gemäß Fig. 2 im Befüllungszustand,
- Fig. 4: das Einlaßventil gemäß Fig. 2 nach erfolgter Einspritzung.

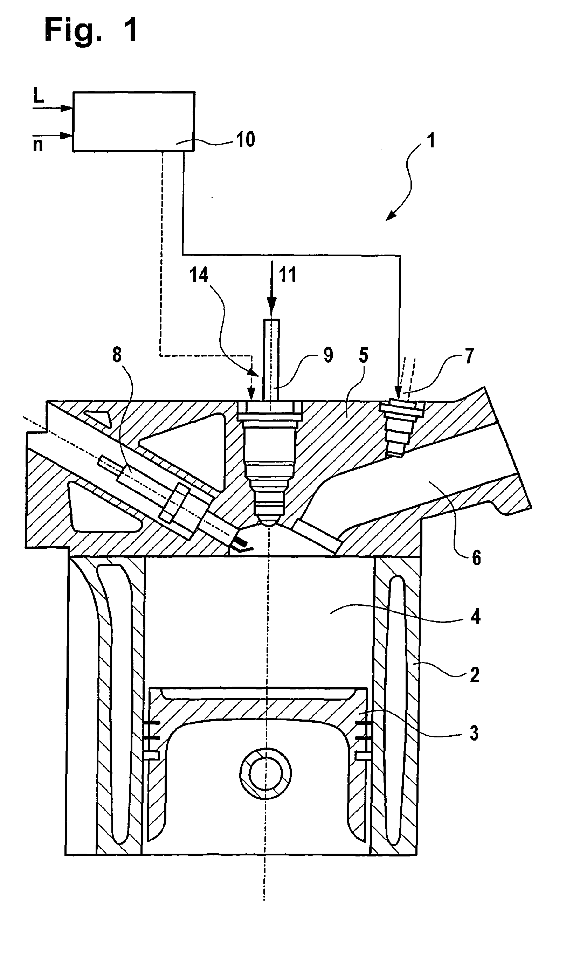

Bei der in Fig. 1 dargestellten Brennkraftmaschine 1 ist in jedem Zylinder 2 in bekannter Weise ein Hubkolben 3 angeordnet, welcher einen Brennraum 4 begrenzt und von einem Zylinderkopf 5 abgeschlossen ist. Im Brennraum 4 wird zum Antrieb des Kolbens 3 ein Gemisch aus Brennstoff und Verbrennungsgas durch den Zündfunken einer am Zylinderkopf 5 angeordneten Zündkerze gezündet und verbrannt. Das Verbrennungsgas wird dem Brennraum durch mindestens einen Einlaßkanal 6 zugeführt. Für die Abgasabführung sind die Zylinder 2 mit entsprechenden Auslaßkanälen ausgestattet. Der Ladungswechsel der Zylinder wird von hier nicht dargestellten Gaswechselventilen gesteuert, welche in den Einlaßkanälen und Auslaßkanälen angeordnet sind.

Das Brennstoffzuführsystem der Brennkraftmaschine 1 umfaßt mindestens einen Saugrohrinjektor 7, welcher nach Art der äußeren Gemischbildung Brennstoff in den Einlaßkanal abgibt. Dabei kann allen Zylindern 2 der Brennkraftmaschine 1 ein gemeinsamer Saugrohrinjektor 7 zugeordnet sein und in einer gemeinsamen Saugleitung angeordnet sein (Singlepoint-Einspritzung) oder jedem Zylinder 2 ein jeweiliger Saugrohrinjektor 7 zugeordnet sein (Multipoint-Einspritzung). Der Saugrohrinjektor 7 ist Teil eines Brennstoffzuführsystems, welches außerdem pro Zylinder 2 mindestens ein weiteres im Zylinder 5 in zentraler Lage eingebautes Einblasventil 9 umfaßt, welches Brennstoff mit sauerstoffreichem Verbrennungsgas direkt in den Brennraum 4 abgibt. Zu diesem Zweck ist an das Einblasventil 9 eine Brennstoffzufuhr 14 und eine Frischluftzufuhr 11 angeschlossen. Die im jeweiligen Betriebspunkt der Brennkraftmaschine zuzumessende Brennstoffmenge wird von einer Steuereinheit 10 bestimmt, der zur Ermittlung des Betriebspunktes der Brennkraftmaschine 1 und der entsprechenden Brennstoffmenge geeignete Betriebsparameter eingegeben werden, beispielsweise die Betriebslast L und/oder die Drehzahl n der Brennkraftmaschine 1.

Nach der vorliegenden Erfindung wird das Einblasventil 9 wenigstens in bestimmten Betriebsbereichen der Brennkraftmaschine zur Durchführung einer Zündeinspritzung eingesetzt, welche während des Kompressionstaktes des jeweiligen Zylinders erfolgt und ein ansonsten mageres Grundgemisch im Brennraum 4 auf ein zündfähiges Maß anreichert. Dabei veranlaßt die Steuereinheit 10 die Vorbereitung eines mageren Grundgemisches durch entsprechende Ansteuerung der von ihr steuerbaren Zumeßeinrichtungen, d.h. wenigstens den Saugrohrinjektor 7. Es ist jedoch auch möglich, zur Einbringung der Kraftstoffmenge, beispielsweise wenn diese in Abhängigkeit des Betriebspunktes einstellbar ist, der Steuereinheit 10 auch Direkteinspritzventile zuzuordnen. Dabei könnten das Einblasventil 9 ebenso wie der Saugrohrinjektor 7 über eine strichliert dargestellte Steuerleitung verbunden sein, wobei die Steuereinheit 10 die Freigabe der Injektoren aufeinander abstimmt und durch Kombination der inneren mit der äußeren Gemischbildung das Brennstoff-/Luftgemisch konfiguriert.

Die Betätigung des Einblasventils im Rahmen der Zündeinspritzung zur Anreicherung des Grundgemisches im Brennraum kann nach der vorliegenden Erfindung unabhängig von der betriebspunktabhängigen Brennstoffzumessung erfolgen. Es kann daher auch ein Brennstoffzuführsystem vorteilhaft sein, indem ein unabhängig angesteuertes Einblasventil zusätzlich zu den von der Steuereinheit 10 zur betriebspunktabhängigen Kraftstoffzumessung ansteuerbaren Einrichtungen zugeordnet ist. Bei der Gemischbildung wird im Brennraum mit dem von der Steuereinheit 10 zugemessenen Brennstoff ein mageres Grundgemisch mit einem hohen Abgasgehalt gebildet. Das Abgas kann dabei im Wege der Abgasrückführung aus der Auslaßleitung der Brennkraftmaschine bereitgestellt werden. Besonders vorteilhaft wird das Abgas im Brennraum nach der Verbrennung zurückgehalten, wobei durch geeignete Einstellung der Steuerzeiten der Gaswechselventile auf einfache Weise ein Unterdruck im Brennraum erzeugbar ist, welcher das Abgas am Verlassen des Brennraumes bei geöffnetem Auslaßventil hindert bzw. aus dem Auslaßkanal zurück in den Brennraum 4 saugt. Bei der Einblasung von Brennstoff im Rahmen der Zündeinspritzung verdrängt das in den Brennraum eintretende Verbrennungsgas bei der Einblasung das Grundgemisch mit hohem Abgasgehalt. Das Einblasventil 9 ist in der Nähe der Zündkerze 8 angeordnet und bläst sauerstoffreiches Verbrennungsgas bei der Zündeinspritzung in den Bereich der Elektroden der Zündkerzen, wodurch zum Zündzeitpunkt an der Zündkerze zündwilliges Gemisch vorliegt. Nach der Zündung des sauerstoffreichen Verbrennungsgases wird das abgasreiche Gemisch im übrigen Brennraum entflammt, wobei die Zündeinspritzung die Möglichkeit schafft, im Brennraum ein selbst schwer oder nicht entflammbares Grundgemisch zu bilden und mit zu verbrennen. Durch die Einblasung des Brennstoffes für die Zündeinspritzung gemeinsam mit sauerstoffreicher Verbrennungsluft wird die Wirkung der Verdrängung des Grundgemisches aus dem Bereich der Zündkerze verstärkt. Die erfindungsgemäße Durchführung der Zündeinspritzung mit einem luftunterstützten Verfahren erlaubt eine enorme Anhebung des möglichen Abgasgehaltes im Grundgemisch gegenüber bisher denkbaren Abgasrückführungsraten und trägt so maßgeblich zu einer Senkung der Abgasemission der Brennkraftmaschine 1 bei.

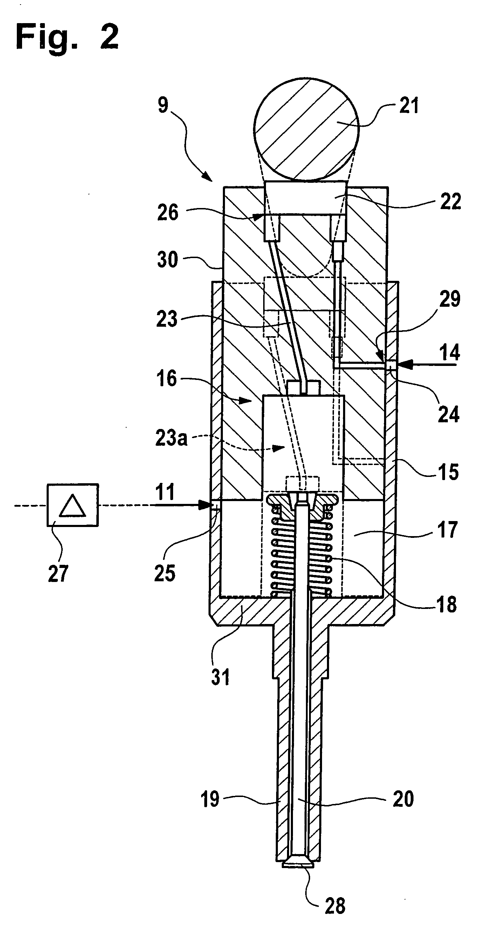

Fig. 2 zeigt einen Schnitt eines vorteilhaften Ausführungsbeispiels für ein Einblasventil 9, welches zur Durchführung einer Zündeinspritzung in den Zylinderkopf der in Fig. 1 dargestellten Brennkraftmaschine einsetzbar ist. Das Einblasventil 9 ist als Kolben/Zylindereinheit ausgebildet, wobei das längsbewegliche Kolbenelement 16 in einem Ventilgehäuse 15 angeordnet ist und mit einem Boden 31 des Ventilgehäuses 15 eine Einblaskammer 17 begrenzt. Am Boden 31 des Ventilgehäuses 9 ist eine langgezogene Einblasdüse 19 ausgebildet, welche in montiertem Zustand des Einblasventils in den Brennraum des Zylinders einragt. Die Einblasdüse 19 hat in ihrem Innenrohr eine fluidische Verbindung zur Einblaskammer 17 und wird von einer Ventilnadel 20 verschlossen, welche an einem freien Ende der Einblasdüse 19 mit einem Verschlußglied 28 aufliegt. Die Ventilnadel 20 ist dabei als nach außen öffnendes Ventilglied ausgebildet, wobei das Verschlußglied 28 unter dem Druck im Innenraum des Ventilgehäuses 15 gegen die Rückstellkraft einer Feder 18 öffnet. Die Rückstellfeder 18 ist im vorliegenden Ausführungsbeispiel als konzentrisch zur Ventilnadel 20 angeordnetes Schraubenfederelement ausgebildet, welches sich am Boden 31 des Ventilgehäuses 15 einerseits und an einem auf die Ventilnadel 20 wirkenden Ventilteller abstützt.

Den Ventiltrieb des Einblasventils 9 bildet im wesentlichen ein Steuernocken 21, welcher auf das längsbewegliche Kolbenelement 16 wirkt. Das Kolbenelement 16 ist dabei bis zum Boden 31 des Ventilgehäuses 15 mit seiner unteren Kolbenringfläche niederdrückbar. Im Zentrum der Kolbenringfläche ist dabei eine Ausnehmung zur Aufnahme des vom Boden 31 hervorstehenden Federtriebs der Ventilnadel 20 vorgesehen. Der Steuernocken 21 wird von einer Nockenwelle der Brennkraftmaschine betätigt. Der Ventiltrieb des Einblasventils 9 ist dadurch unabhängig von den Betriebspunktabhängig steuerbaren Brennstoffzumeßeinrichtungen, d.h. im Ausführungsbeispiel nach Fig. 1 vorgesehenen Saugrohrinjektor 7, dessen Betätigung von der Steuereinheit bestimmt ist.

Die Versorgung des Einblasventils 9 mit Brennstoff und Verbrennungsgas, welche gemeinsam von der Einblasdüse 19 abgegeben werden, wird von einer Schlitzsteuerung freigegeben und abgesperrt, in welcher das Kolbenelement 16 des Einblasventils 9 das Steuergebiet bildet. Für die Schlitzsteuerung ist das Ventilgehäuse 15 von Steuerschlitzen 24, 25 durchbrochen, an welche die Luftzuführung 11 bzw. die Brennstoffzuführung 14 angeschlossen sind. Die Steuerschlitze 24, 25 sind vom Umfang 30 des Kolbenelementes 16 abdeckbar. Eine Freigabe der Brennstoffzuführung und der Luftzuführung ins Innere des Einblasventils 9 erfolgt im oberen Totpunkt der Hubbewegung des Kolbenelementes. Die Steuerschlitze 24, 25 sind derart angeordnet, daß das untere Ende des Kolbenelementes 16 die Steuerkante der Schlitzsteuerung bildet und im oberen Totpunkt der Hubbewegung sauerstoffreiches Verbrennungsgas unmittelbar in die Einblaskammer 17 einströmen kann.

Der Steuerschlitz 24 der Brennstoffzufuhr 14 ist in größerem Abstand zum Boden 31 des Ventilgehäuses 15 angebracht und das Kolbenelement 16 weist an seinem Umfang eine mit dem Schlitz 24 in Überdeckung bringbare Einlaßöffnung 29 eines Versorgungskanals 23 auf. Der Versorgungskanal 23 ist im Inneren des Kolbenelementes 16 ausgebildet und endet im Einlaßbereich der Einblasdüse 19 bzw. deren Ventilnadel 20. In dem Versorgungskanal 23 ist eine Kraftstoffkammer 22 ausgebildet, in der das einzublasende Brennstoffvolumen aufgenommen ist. Auf die Kraftstoffkammer und den Vorlauf in dem Versorgungskanal 23 wirkt ein Pumpelement 26 für Kraftstoff, das von dem Steuernocken 21 beaufschlagt ist. Der stromab der Brennstoffkammer 22 liegende Abschnitt des Versorgungskanals 23 mündet im zentralen Bereich innerhalb des von der Kolbenringfläche begrenzten Zentrums des Kolbenelementes 16 in die Einlaßkammer 17 und liegt etwa auf einer Längsachse der Einblasdüse 19. Die Brennstoffkammer 22 und das Volumen der Einblaskammer 17 werden im Hinblick auf die sichere Entflammung der Inertgasmengen im Brennraum durch die Zündeinspritzung abgestimmt, so daß mit einem kleinen und baulich einfachen Pumpe/Düse-Element eine luftunterstützte Zündeinspritzung herstellbar ist.

Vorteilhaft betragen die Volumina der Einblaskammer 17 von 5 mg bis 25 mg Luft bei einem Brennstoffvolumen von 0,5 mg bis 8 mg pro Einblasvorgang. Die Mengenverhältnisse sind durch Zuführung der Medien unter Druck veränderbar; beispielsweise kann in der Luftzuführung 11 eine Vordruckpumpe 27 als Kompressor eingebaut sein. In einer vorteilhaften Abstimmung des Einlaßventils 9 beträgt die Brennstoffmenge ca. 1 mg bei einem Vordruck von 3,8 bar und einer Luftmenge von ca. 14 g unter atmosphärischem Druck.

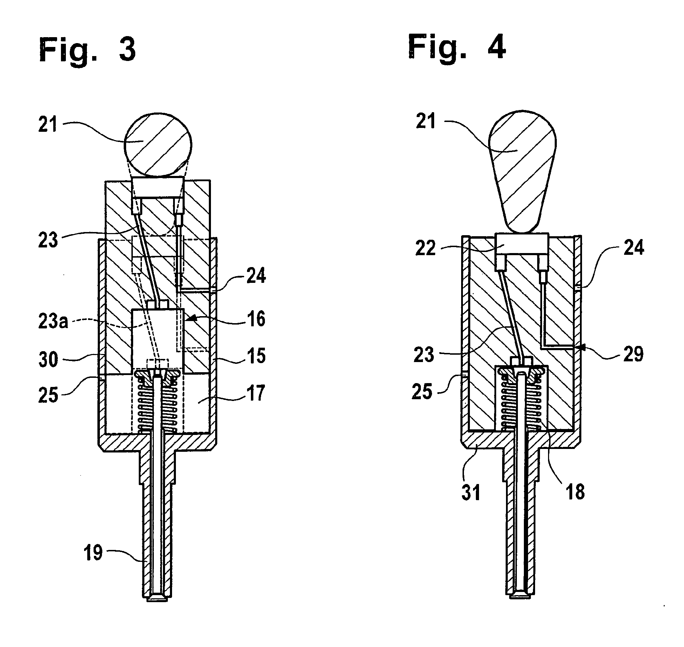

Fig. 3 zeigt das Einblasventil 9 in der Stellung, in der das Kolbenelement 16 seine obere Endlage einnimmt und in der durch die Steuerschlitze 24, 25 eine Nachfüllung des Einblasventils mit Frischluft bzw. Brennstoff erfolgt. In dieser Stellung des oberen Totpunktes, bei dem das Kolbenelement 16 den Steuerschlitz 25 und damit den Zugang der Luftzuführung zur Einblaskammer 17 freigibt, wird auch der Versorgungskanal im Kolbenelement, welcher sich beim Einblasvorgang in der strichliert dargestellten Stellung 23a befindet, mit seiner Einlaßöffnung am Umfang 30 des Kolbenelementes in Überdeckung mit dem Steuerschlitz 24 der Brennstoffzuführung gebracht. Die Feder 18 hält dabei das Einblasventil in der geschlossenen Stellung.

In Fig. 4 ist das Einblasventil in der strichliert in Fig. 3 angedeuteten Stellung gezeigt, bei der die Abgabe des Brennstoffgases nach vorübergehend geöffneter Einblasdüse 19 abgeschlossen ist. Der Steuernocken 21 hat dabei das Kolbenelement 16 bis an den Boden 31 des Ventilgehäuses 15 niedergedrückt. Zu Beginn der Kompressionsbewegung des Kolbens verschließt der Umfang 30 des Kolbenelementes die Steuerschlitze und ermöglicht die Kompression in der Einblaskammer 17 sowie im Versorgungskanal für Brennstoff. Durch geeignete Abstimmung der Rückstellkraft der Feder 18 kann der Öffnungszeitpunkt der nach außen öffnenden Ventilnadel in der Einblasdüse 19 unter dem Innendruck des Einblasventils entsprechend eingestellt werden. Sobald der Druck in der Einblaskammer 17 einen bestimmten Wert unterschreitet, stellt die Feder 18 die Ventilnadel wieder in die Schließstellung des Ventils zurück.

## Patentansprüche

1. Brennstoffzuführsystem für eine fremdgezündete Brennkraftmaschine mit pro Zylinder (2) einem Einblasventil (9), dem Brennstoff und Verbrennungsgas zuführbar ist zur Direktabgabe in einen im Zylinder (2) ausgebildeten Brennraum (4), sowie mit wenigstens einer weiteren Brennstoffzumesseinrichtung (7) in einem in den Brennraum (4) mündenden Ansaugkanal (6) zur Bildung eines Brennstoff/Gasgemisches, das dem Brennraum (4) separat als Verbrennungsgas zuführbar ist,
**dadurch gekennzeichnet,**
**daß** das Einblasventil (9) als Kolben/Zylindereinheit ausgebildet ist, wobei ein Kolbenelement (16) längsbeweglich in einem Ventilgehäuse (15) angeordnet ist und eine Verbrennungsgas führende Einblaskammer (17) begrenzt, an welcher eine Einblasdüse (19) für die Gemischabgabe angeschlossen ist, wobei das Kolbenelement (16) ein Steuerglied einer Schlitzsteuerung zur Freigabe der Zuführung von Brennstoff und Verbrennungsgas in das Einblasventil bildet.

2. Brennstoffzuführsystem nach Anspruch 1 ,
**dadurch gekennzeichnet,**
**daß** das Einblasventil (9) unabhängig von der weiteren Brennstoffzuführeinrichtung des Brennstoffzuführsystems ansteuerbar ist.

3. Brennstoffzuführsystem nach Anspruch 1 oder 2,
**dadurch gekennzeichnet,**
**daß** das Kolbenelement (16) von einem Steuernocken (21) beaufschlagt und durch diesen in seiner Längsrichtung verschiebbar ist.

4. Brennstoffzuführsystem nach einem der Ansprüche 1 bis 3,
**dadurch gekennzeichnet,**
**daß** der Steuernocken (21) von einer Nockenwelle der Brennkraftmaschine antreibbar ist.

5. Brennstoffzuführsystem nach einem der Ansprüche 1 bis 4,
**dadurch gekennzeichnet,**
**daß** das Einblasventil (9) ein zusätzliches Ventil zur Variation des Zeitpunktes und/oder des Drucks der Brennstoffabgabe aufweist.

6. Brennstoffzuführsystem nach einem der Ansprüche 1 bis 5,
**dadurch gekennzeichnet,**
**daß** in einer Verbrennungsgas zuführenden Versorgungsleitung des Einblasventils (9) eine Vordruckpumpe (27) angeordnet ist.

7. Brennstoffzuführsystem nach einem der Ansprüche 1 bis 6,
**dadurch gekennzeichnet,**
**daß** das Einblasventil (9) benachbart einer Zündkerze (8) des Zylinders (2) angeordnet ist.

8. Brennstoffzuführsystem nach Anspruch 7,
**dadurch gekennzeichnet,**
**daß** das Einblasventil (9) derart angeordnet ist, daß die Einblasdüse (19) in den Umgebungsbereich der Zündkerze (8) weist.

9. Brennstoffzuführsystem nach einem der Ansprüche 1 bis 8,
**dadurch gekennzeichnet,**
**daß** in einem Ansaugbereich der Brennkraftmaschine (1) wenigstens ein Brennstoffinjektor (7) vorgesehen ist.

10. Brennstoffzuführsystem nach einem der Ansprüche 1 bis 9,
**dadurch gekennzeichnet,**
**daß** das Einblasventil (9) hinsichtlich der Mengenverhältnisse des abgebbaren Brennstoffgemisches derart ausgelegt ist, daß ein zündfähiges Gemisch gebildet wird.

11. Brennstoffzuführsystem nach einem der Ansprüche 1 bis 10,
**dadurch gekennzeichnet,**
**daß** die Steuerung des Einblasventils (9) derartig abgestimmt ist, daß eine Brennstoffabgabe während des Kompressionstaktes des Zylinders erfolgt (Zündeinspritzung) zur Anreicherung des im Zylinder befindlichen Brennstoffgemisches.

12. Brennstoffzuführsystem nach einem der Ansprüche 1 bis 11,
**dadurch gekennzeichnet,**
**daß** das Brennstoffzuführsystem kombiniert ist mit Einrichtungen zur Beimischung von Abgas in das Frischgas.

13. Einblasventil für eine Brennkraftmaschine mit einer Einblasdüse (19) zur gleichzeitigen Abgabe separat zugeführten Brennstoffs und Verbrennungsgas in einen im Zylinder (2) ausgebildeten Brennraum (4),
**dadurch gekennzeichnet,**
**daß** das Einblasventil (9) als Kolben/Zylindereinheit mit einem längsbeweglich in einem Ventilgehäuse (15) angeordneten Kolbenelement (16) ausgebildet ist, welche eine mit Verbrennungsgas gespeiste Einblaskammer (17) begrenzt, wobei das Kolbenelement (16) das Steuerglied einer Schlitzsteuerung zur Freigabe der Brennstoffzufuhr (14) und der Verbrennungsgaszufuhr (11) bildet.

14. Einblasventil nach Anspruch 13,
**dadurch gekennzeichnet,**
**daß** das Ventilgehäuse (16) mit Steuerschlitzen (24, 25) versehen ist, an welche die Brennstoffzufuhr (14) und die Verbrennungsgaszufuhr (11) anschließbar sind und welche vom Umfang (30) des Kolbenelementes (16) abdeckbar angeordnet sind.

15. Einblasventil nach Anspruch 13,
**dadurch gekennzeichnet,**
**daß** das Kolbenelement (16) an seinem Umfang Einlaßöffnungen (29) für einen oder mehrere Versorgungskanäle (23, 23a) aufweist, welche mit den jeweils zugeordneten Steuerschlitzen (24, 25) in Überdeckung bringbar sind.

16. Einblasventil nach einem der Ansprüche 13 bis 15,
**dadurch gekennzeichnet,**
**daß** die Versorgungskanäle (23, 23a) in dem Kolbenelement (16) ausgebildet sind.

17. Einblasventil nach einem der Ansprüche 13 bis 16,
**dadurch gekennzeichnet,**
**daß** die Steuerschlitze (24, 25) etwa auf einer dem oberen Totpunkt der Hubbewegung des Kolbenelementes (16) entsprechenden Höhe angeordnet sind.

18. Einblasventil nach einem der Ansprüche 13 bis 17,
**dadurch gekennzeichnet,**
**daß** die Einblasdüse (9) eine nach außen öffnende Ventilnadel (20) aufweist, deren Öffnungsbewegung gegen die Kraft einer Feder (18) erfolgt.
